Europäisches Patentamt

**European Patent Office**

**Office européen des brevets**

(11) Publication number: **0 095 874**
**A1**

## (12) EUROPEAN PATENT APPLICATION

(21) Application number: **83302908.5**

(22) Date of filing: **20.05.83**

(51) Int. Cl.³: **C 08 L 29/04, B 32 B 27/00**

(30) Priority: **27.05.82 US 382481**

(43) Date of publication of application: **07.12.83**
**Bulletin 83/49**

(84) Designated Contracting States: **BE CH DE FR GB IT LI NL SE**

(71) Applicant: **Miller, Gerald W., 2165 Cable Car Road, Cincinnati Ohio 45244 (US)**
Applicant: **Lutzmann, Harald H., 2241 Briarwood Road, Cleveland Ohio 44118 (US)**

(72) Inventor: **Miller, Gerald W., 2165 Cable Car Road, Cincinnati Ohio 45244 (US)**
Inventor: **Lutzmann, Harald H., 2241 Briarwood Road, Cleveland Ohio 44118 (US)**

(74) Representative: **Austin, Hedley William et al, A.A. THORNTON & CO. Northumberland House 303-306 High Holborn, London WC1V 7LE (GB)**

(54) **Melt extrudable anhydrous polyvinyl alcohol compositions and extruded articles therefrom.**

(57) The composition contains a plasticizer which is a hydroxyl-free water-insoluble organic material which is non-volatile at extrusion temperatures (about 230°C) and has a solubility parameter of greater than $(10 \text{ cal/cc})^{1/2}$. Examples of such plasticizers include N-substituted fatty acid amides, aromatic sulphonamides, aryl phosphates or phosphites, sulphonated alkyl phenols and N-alkyl pyrrolidone.

Extruded articles made from the compositions have good gas-barrier properties and are useful for packaging purposes.

EP 0 095 874 A1

ACTORUM AG

- 1 -

## Melt extrudable anhydrous polyvinyl alcohol compositions and extruded articles therefrom

This invention is concerned with melt extrudable anhydrous polyvinyl alcohol compositions.

Present day packaging films are used to prepackage many foodstuffs, medicinal products, cosmetic products, etc. Films of, for example, regenerated cellulose, polyethylene, polypropylene, and polyvinylidine chloride are commonly used for this purpose. These materials provide acceptable packaging where heat sealability, low cost and protection against humidity changes are required.

However, use of an extruded film of one polymer usually does not provide long package life to materials susceptible to oxygen deterioration and multiple-ply products made by post-lamination and, in some instances, co-extrusion at near melt temperatures, of a number of different polymers have been developed to provide optimum life to pre-packaged goods sensitive to oxygen deterioration.

It has long been known that films of polyvinyl alcohol and its copolymers with vinyl acetate are the most effective barrier polymers for fixed gases at low humidities, but that these films have poor moisture barrier properties and change in their barrier qualities for fixed gases at high humidities. Studies of the prior art indicate that films of polyvinyl alcohol (or PVOH)

have been primarily made from aqueous solutions of the polymer or require the presence of some water in conjunction with water-soluble plasticizers. In our prior art search every reference included a plasticizer characterized by having a plurality of hydroxyl groups in the molecule, for example glycerine, various glycols and other polyhydric compounds.

The polyvinyl alcohol polymers known and used in making extruded products, such as films and laminates, have not been melt-processed in the absence of melt processing additives and when in their pure homopolymeric form, no thermal processing methods are known to exist. The temperature ranges essential for such extrusion methods are known to cause decomposition of the homopolymer; moulded melt extrusion products produced thereby are not commercially satisfactory. When copolymers containing up to about 85% polyvinyl alcohol (PVOH) and about 15% or more of polyvinyl acetate are plasticized with an aqueous solution of a water soluble glycol or polyglycol, extensive and corresponding costly modifications are required in the process and apparatus used to effect moulding or extrusion.

Among the prior art patents relating to extruded polyvinyl alcohol products, the following are believed to be the most relevant.

British Specification 1,544,780 describes a method wherein a mixture of water, glycerine or other water-soluble plasticizer and polyvinyl alcohol is co-extruded along with a polyolefin, such as polypropylene, at a temperature above 150°C. Rapid decompression and venting are required to flash off the water vapour present. Rate of through-put through the extrusion head is critical and vacuum is essential to aid water removal.

Wysong, in U.S. Patents 4,156,047; 4,155,971 and 4,119,604, discloses the use of mixtures of low and medium molecular weight polyvinyl acetate/alcohol copolymers, (optionally with a vinyl alcohol/methyl methacrylate copolymer), a polymeric polyethylene oxide liquid having a molecular weight of 380 to 420, and water. The extrusion process is operable only with partially hydrolyzed polyvinyl alcohol polymers.

Japanese Patent Specification 73-29306 describes the extrusion polyvinyl alcohol with water. Japanese Patent Specification 75-09820 describes the production of blown polyvinyl alcohol films using a dry gas inside the bubble at 100°-200°C and further drying the outside of the bubble at 90°-200°C from a mixture of 70 parts polymer, 30 parts water and an optional water-soluble plasticizer, such as diethylene glycol.

Westhoff et al, in Starch, 31,163 (1979) describe mixtures of starch, 96% hydrolyzed polyvinyl alcohol, and a glycol glycoside (from ethylene glycol and starch) cast on to a silicone treated plate. The mixtures are not heat extrudable, however, and no thin films were ever produced.

U.S. Patent 3,886,112 describes extruded mixtures of partially hydrolyzed polyvinyl alcohol with water-soluble polyols, such as hexanediol, propylene glycol and tetramethylene glycol, in conjunction with less than 0.5% sodium borate. It is an inoperative system with fully hydrolyzed polyvinyl alcohol homopolymers.

U.S. Patent 3,409,598 is the only prior document found which discloses the use of an anhydrous melt extrusion of partially hydrolyzed polyvinyl alcohol (PVOH). Homopolymers of vinyl alcohol were not shown to be melt-extrudable under any conditions. This patent makes it clear that the only polymers melt extrudable under anhydrous conditions were those specifically produced from a copolymer "by saponifying vinyl acetate or a copolymer of vinyl acetate preferably with small amounts of acrylic, maleic or itaconic acid, their esters or ethers". Further the saponification step requires the presence in the above specific vinyl acetate before polymerization (see column 3, Example 1) and before saponification, of a polyhydric alcohol. Some polyhydric alcohol essentially becomes a part of the resultant copolymer. That this must be is reflected in the observation that when "polyhydric alcohol is mixed after completing the saponification, it is inferior in its thermoplasticity as a conventional intermix after completing the saponification" (column 2, lines 21-26). Column 1, lines 54-59 also establish that "it has been known that water and plasticizer are mixed with PVA (polyvinyl alcohol)to lower the melt viscosity of the PVA and the mixture is subjected to extrusion moulding". This patent therefore appears to provide "self-plasticized" polyhydroxy copolymers.

Our study of prior art has shown that it is considered essential to use water in conjunction with a plasticizer which is a selected water-soluble polyhydric alcohol at least in the mixing step prior to the melt-extrusion of hydrolyzed polyvinyl alcohols. The only exception found is that of U.S. Patent 3,409,598 where a special polymer is made in the presence of a water-soluble polyhydric alcohol. No known references indicate that a fully hydrolyzed polyvinyl alcohol has been satisfactorily melt-extruded or injection moulded by prior art techniques. Water appears to be universal in the case of polyvinyl-alcohol-polyvinyl acetate copolymer technology. Otherwise these polymers char rather than melt at the essential high temperatures of melting and extrusion. Glycerine and water are commonly used in combination in the extrusion or injection mass. Water aids in the development of the essential melt flow

- 5 -

0095874

characteristics, improves the thermal stability of the polymer at moulding temperatures, and inhibits migration or exudation of the polyol plasticizer. The presence of water causes bubbles and imperfections in the extrudate, however, so that early de-volatilization thereof is a prerequisite.

Homopolymers of polyvinyl alcohol containing in excess of 95% vinyl alcohol polymer have not hitherto been melt extruded from anhydrous systems containing polyhydric alcohol and glycol or polyglycol or glycerine plasticizers. Our prior art study has shown that polyvinyl alcohol copolymers generally, containing from 85% to 95% polyvinyl alcohol and not fully hydrolyzed, have also not hitherto been melt extrudable in the absence of water and a water-soluble polyhydroxy group-containing plasticizer.

According to the present invention, there is provided an improved melt extrudable composition which comprises at least one vinyl alcohol polymer and at least 5% by weight of a plasticiser, in which the plasticiser is a hydroxyl-free organic material which is substantially water-insoluble and non-volatile at extrusion temperatures and has a solubility parameter greater than 10 $(cal/cc)^{\frac{1}{2}}$.

The composition according to the invention may be melt extrudable, injection or blow mouldable; the the vinyl alcohol polymer may comprise a 100% hydrolyzed polymer of polyvinyl alcohol or a copolymer of polyvinyl alcohol, which may contain as much as 15% of polyvinyl acetate units and may be an olefin alcohol copolymer in which the olefin contains from 2-4 carbon atoms.

As indicated above it is well known that completely hydrolyzed polyvinyl alcohols and copolymers of polyvinyl alcohol with polyvinyl acetate and other polymerizable monomers, and in particular olefin modified polyvinyl alcohols, have outstanding usefulness because of their low gas transmission rates, particularly for gaseous oxygen. It is well known in the packaging art that the principal cause of deterioration of packaged goods on storage is oxidative deterioration. Thus, the art is replete with attempts to produce films and injection moulded or blow moulded articles of polyvinyl alcohol as at least one layer of a packaging material, such as bottles and film-wraps, to inhibit oxygen transmission through the packaging material.

Fundamentally, this invention provides a melt extrudable polymer composition of matter which can provide, for example, packaging materials such as bottles and flexible films, which have exceptional resistance to permeation by gases, particularly oxygen.

The melt extrudable anhydrous polyvinyl alcohol polymer compositions of this invention comprise at least one of the following sub-classes which may be used alone or in combination with one another.

A. Fully hydrolyzed homopolymer of vinyl alcohol, in which the vinyl alcohol units are in excess of 95% preferably near 100% (e.g. greater than 96%, more preferably greater than 98%).

B. Copolymers of vinyl alcohol and vinyl acetate, which are arbitrarily defined as containing less than 95% polyvinyl alcohol units. Such copolymers preferably contain at least 85% vinyl alcohol units.

C. The polymers of A or B where the polyvinyl alcohol polymers are copolymerised with from 5% to 40% of an olefin having 2 to 4 carbon atoms.

0095874

- 7 -

Ethylene is the preferred olefin as ethylene-vinyl alcohol copolymers are presently commercially available. Other suitable polymers of this class, as described in U.S. Patent 3,585,177 contain from about 8% to 35% of a 2 to 4 carbon atom olefin modification including ethylene, propylene and isobutylene.

D. Physical mixtures of each of the above three classes may be selected depending on say, price and end use, for the production of co-extruded films, laminates, injection moulded articles, blow moulded articles, etc., monofilaments and films useful alone, or as substrates for packaging.

Polymers of polyvinyl alcohol as described above are available in a variety of molecular weight ranges; an appropriate choice of molecular weight can therefore be made in preparing a composition according to the invention.

Polyvinyl alcohol polymers generally useful may range in molecular weights within the range of from 30,000 to 150,000. Proportions of varying molecular weight ranges may be co-blended to modify, regulate and control the melt viscosity and melt temperature in amounts of, say 4% to 50% by weight of the composition according to the invention.

The plasticizers used in the composition according to the invention are water-insoluble organic compounds which are free from hydroxyl groups and further characterized by three additional limitations, namely; the solubility parameter is greater than 10 $(cal/cc)^{\frac{1}{2}}$ the plasticizer should be substantially water-insoluble (e.g. a water-solubility of less than 3%), and the plasticizer should be essentially non-volatile (that is have a negligible vapour pressure) at extrusion
temperatures (e.g. up to 232°C).  The plasticizer
is generally used in excess of about 5%, and up to
an upper limit of about 50% by weight of the polymer
content.

The plasticizers used in the invention do not
embrace most of the well-known plasticizers as are in
common use with polyvinyl chloride, such as alcohol
esters of phthalic acid; propylene glycol dibenzoate,
ethylene glycol dibenzoate and di-octyl adipate.

Specific classes of plasticizers suitable for
use in compositions according to the invention comprise
N-substituted long chain fatty amides (long chain
embracing the water insoluble aliphatic fatty acid
amides from about 10 to 22 carbon atoms in the aliphatic chain),alkyl, aryl (e.g. alkaryl) sulphonamides, N-alkyl pyrrolidones, sulphonates of alkyl phenols,
alkyl and aryl phosphates and phosphites, and mixtures
of two or more thereof.

Specific members of the above classes which are
readily available commercially include, by way of
exmaple, the following materials: "Santicizer 9"
(para toluene sulphonamide), and "Santicizer 8" (a
mixture of ortho- and para-isomers of N-ethyl toluene
sulphonamide), available from Monsanto Co.; "Mesamoll"
(a sulphonated alkyl phenol) from Mobay Chemical Co.;
"Kronitex 50" said to be (isopropyl phenyl) di-phenyl
phosphate from FMC Corporation; "Hallcomid M 18-OL"
(a dimethyl amide of oleic acid) from C.P. Hall Co.;
and N-cyclohexyl pyrrolidone (GAF).

The plasticizers decrease the melt viscosity
of the polymers with increasing plasticizer content;
the melt viscosity, however, is more effectively regulated through control of the amount of the low molecular
weight polymer components as is consistent with normal
polymer behaviour.

The compositions according to the invention can provide melt extruded or extrusion coated articles of manufacture which may be in single layer films, co-extruded laminated films where one or more layers may be of another material, or they may be a layer of thicker sections as in blow-moulded or injection moulded articles, as for example, bottles. The use of polyvinyl alcohol polymers in the formation of a variety of physical shapes and consisting of laminates of various compositions of polymeric films, sheets, rods, plates, concentric tubes, and complex geometric forms is, of course, known. However, the sub-classes of polyvinyl alcohols described above have not previously been considered extrudable on standard equipment.

The compositions according to the invention may be formulated just prior to and directly in commercial forming operations; they can be used in a readily feedable particulate form for melt-extrusion, blow moulding and injection moulding operations. The compositions according to the invention can be used in the manufacture of articles as described in U.S. Patent 4,254,169 and British Specification 1,544,780 without the requirement of proportionate feeding equipment, and other equipment essential to pre-blending.

Melt extrusion of compositions according to the invention under anhydrous conditions at temperatures of the order of 193 to 227°C enables clear, bubble free films characterized by extremely low gas transmission rates, particularly to oxygen, to be produced.

A major advantage of compositions according to the invention, in addition to the controlled superior quality of the transparency of films produced therefrom and their freedom from surface imperfections, is that they can be processed in machinery used in processing standard polymers, such as polyethylene, polypropylene, ethylene-propylene copolymers, polyvinyl chloride and nylon.

In order that the present invention may be more fully understood; the following Examples are given by way of illustration only. In the Examples all parts are by weight unless indicated to the contrary.

EXAMPLE 1

One hundred parts of a 99% hydrolyzed polyvinyl alcohol homopolymer having a weight average molecular weight of about 100,000 (Elvanol 71-30) was dried at 71°C for 16 hours and mixed with 20 parts of p-toluene sulphonamide (Santicizer 9), 10 parts of a mixture of the ortho and para isomers of N-ethyl toluene sulphonamide (Santicizer 8) and 2 parts of zinc stearate as lubricant. After extensive blending at high shear rate, the mixture was extruded through a 1.9 cm extruder equipped with 7.6 cm slot die. The extruder had a temperature profile of 149°, 199°, 227°C from the throat to the metering section with a die temperature of 216°C. Extruded films drawn to a thickness of 0.5 x 10$^{-4}$m. extruded well, were free of surface defects and bubbles, which was indicative of commercially accepted quality.

EXAMPLE 2

Eighty-five parts of an 87% to 89% hydrolyzed polyvinyl alcohol copolymer having a molecular weight of about 138,000 (Vinol 523) was dried for 2.5 hours at 82-93°C and mixed with 15 parts of p-toluene sulphonamide and 2 parts of stearamide as lubricant. The essentially anhydrous powder was intensively mixed and fed into an extruder with a temperature profile of 149°, 182°, 204°C from the throat to the metering section and a slot die temperature of 193°C. Films of clear, fused PVOH copolymer film were extruded in thicknesses of 0.25 to 5 x $10^{-4}$m. While films drawn were soluble in cold water, the rate of dissolution was slower than films of the same polymer cast from an aqueous solution.

EXAMPLE 3

Ninety parts of the polyvinyl alcohol copolymer of Example 2, similarly rendered anhydrous, were mixed with 10 parts of the sulphonated alkyl phenol plasticizer ("Mesamoll" of Mobay Chemical) and 2 parts of stearamide. After intensive mixing, the dry powder was fed through an extruder under the same controlled conditions as in Example 2. A water-white or colourless film was smoothly extruded and drawn down to a 0.5 x $10^{-4}$m. thickness.

EXAMPLE 4

Eighty parts of the dried polyvinyl alcohol copolymer of Example 2 were plasticized by the addition of 18 parts of Santicizer 8 and 2 parts of zinc stearate as lubricant. After thorough premixing and extrusion as set out in Example 2, the resulting clear films had the following properties:

| RESIN | PEEL STRENGTH kg/cm |
|---|---|
| Plexar | 1.08-1.82 |
| Macromelt 6901 | 1.58 |
| PVC | 0.0 |

Oxygen permeability:

At 0% Relative Humidity (R.H.): 60 cc/mm/ 100 in $^2$/24 hours.

At 100% R.H.; 84 cc/mm/100 in $^2$/24 hours.

EXAMPLE 5

Fifty parts of a 99% hydrolyzed polyvinyl alcohol homopolymer of molecular weight of about 100,000 (Vinol 125) and 40 parts of an 87% to 89% hydrolyzed copolymer of polyvinyl alcohol-polyvinyl acetate of about 138,000 molecular weight (Vinol 523) were carefully dried to constant weight, intensively mixed
with one part stearamide and 10 parts of a mixture
of ortho and para isomers of N-ethyl toluene sulphonamide (Santicizer 8) and extruded as in Example 1. Films
from 0.25 to 1 x $10^{-4}$ m in section were clear. Thicker
sections exhibited a slight haze.

EXAMPLE 6

Forty five parts of an 87% to 89% polyvinyl
alcohol copolymer having a molecular weight of about
43,000 (Vinol 205) and 45 parts of similarly hydrolyzed
copolymer having a molecular weight of about 138,000,
(Vinol 523 - see Example 5), 2 parts of stearamide and
10 parts of Santicizer 8 were intensively mixed and extruded
as in Example 2. The blend of low and medium weight
polyvinyl alcohol copolymers extruded with a lower
viscosity than when using the high molecualr weight
copolymer alone as in Example 2.

EXAMPLE 7

Ninety parts of copolymer of Vinol 205 (see
Example 6), 10 parts plasticizer (p-toluene sulphonamide) and 2 parts zinc stearate were dried to constant
weight and intensively mixed. The compound extruded
with ease on a 1.9 cm extruder as detailed in
Example 2.

EXAMPLE 8

Ninety parts of Vinol 205 (as in Example 6) and
10 parts of the dimethyl amide of oleic acid (available
from C. P. Hall Co. as Hallcomid M 180L) and 2 parts
zinc stearate were extruded as in Example 2. Except
for a slight yellow cast the extruded films were
comparable with Example 7 and Example 2.

EXAMPLE 9   (Comparative)

Seventy parts Vinol 523 (as in Example 5) and
30 parts of an ethylene-vinyl alcohol copolymer
(EVAL-F from Kuraray Co., Japan) were extensively mixed

- 13 -

0095874

and dried. The extrudate was non-homogeneous. A typical opaque substrate was formed upon exiting the die showing that the mixture was incompatible.

EXAMPLE 10 (Comparative)

Example 9 was repeated using 50 parts by weight of Vinol 205 (see Example 6) and 50 parts of EVAL-F ethylene vinyl alcohol copolymer. The composition upon extrusion was incompatible and non-homogeneous.

EXAMPLE 11

Eighty-nine parts of the ethylene-vinyl alcohol copolymer EVAL-F of Example 9 and 11 parts of p-toluene sulphonamide were dried and intimately admixed. The dry blend extruded easily at 204°C, producing a clear film. The melt leaving the extruder had improved flow characteristics compared with the ethylene-vinyl alcohol copolymer alone under the same extruding conditions. The plasticized extruded film adhered well to Plexar 6 (Chemplex Co.) film when heat bonded together for 30 seconds at 232°C.

EXAMPLE 12

41 parts Vinol 523, 44 parts EVAL-F, and 15 parts p-toluene sulphonamide were extensively mixed, dried and extruded through an extruder having a temperature profile of 127°C, 177°C and 204°C throat to a metering section having a die temperature of 204°C. The extrudate film was as clear as the film of Example 11 and adhered well to a polyamide (Macromelt 6900, Henkel Corp) and other polymer blends containing polyvinyl alcohol polymers and copolymers and/or ethylene-vinyl alcohol copolymer of varying olefin content.

EXAMPLE 13

90 parts of a pre-blend consisting of 45 parts of homopolymer of vinyl alcohol (Elvanol 90-50), having molecular weight from 50-75,000; 45 parts of a similar homopolymer having a molecular weight of about 100,000 (Elvanol 71-30);and 10 parts of (isopropyl phenyl) diphenyl phosphate (Kronitex 50, F.M.C. Corp) were intensively mixed. The blend was extruded under the conditions of Example 1. Some bubbling under the extrusion conditions was noted. On regrinding and re-extrusion, the material had contact clarity and homogeneity.

EXAMPLE 14

45 parts Elvanol 90/50; 45 parts Elvanol 71/30; and 10 parts p-toluene sulphonamide were intensively mixed and extruded under the conditions of Example 1. The extrudate was clear and few bubbles developed. The extruded compound was reground and re-extruded three times. No significant increase in viscosity was observed. However, a yellow colour developed and deepened after each re-extrusion.

EXAMPLE 15

The melt viscosities of the extrudates of Examples 2 and 6 were measured at 200°C. The results show the regulating effect upon melt viscosity relative to the low molecular weight component, which is consistent with normal polymer behaviour. It is observed that the plasticizer exhibits of its effect in the temperature range near the extrusion temperatures, rather than at ambient temperatures.

| Shear rate, $sec^{-1}$ | Viscosity (poise) | |
| --- | --- | --- |
| | Example 2 | Example 6 |
| 50 | 105,000 | 65,000 |
| 100 | 58,000 | 46,000 |
| 150 | 39,000 | 35,000 |

EXAMPLE 16

47.5 parts by weight of Vinol 523; and 47.5 parts by weight of Vinol 205 were mixed with 5 parts by weight of p-toluolsulphonamide and 1/2 part of zinc acetate. Extrusion through a 7.6 cm wide slot die at a melt

- 15 -                    0095874

temperature of 213°C resulted in a well-fluxed and clear film.

Compositions according to the invention can be melt extruded as a single layer film, or as a part of a multilayer structure, with cost savings relative to the prior art. Drying before melt extrusion is necessary as raw materials exposed to high humidity conditions may acquire objectionable water content. Intensive mixing before melt extrusion of the essential components can advantageously be carried out at about 138°C.

The presence of olefin modified polyvinyl alcohol copolymers with homopolymers and copolymers of polyvinyl alcohol reduces the sensitivity of the extrudates to water exposure. Known polymer compositions containing major amounts of polyvinyl alcohol homopolymer and minor amounts of ethylene-vinyl alcohol would not provide homogeneous extrudates; this has been overcome according to the invention. The compositions according to the invention are quite compatible and are readily extruded and co-extruded. Excellent adhesion of the polymer blends of this invention co-extruded with commercial polymers such as "Plexar", certain modified polyesters, some polyamides and other olefin modified copolymers, can be achieved.

The "solubility parameter" as used in the foregoing description and in the following claims is the parameter $\delta$ defined on page IV - 342 of "Polymer Handbook"" edited by J. Brandrup and E.H. Immergut, Second Printing (1966).

CLAIMS

1.    A melt extrudable composition, which comprises
at least one vinyl alcohol polymer and at least 5% by
weight of a plasticizer, characterised in that said
plasticizer is a hydroxyl-free organic material which
is substantially water-insoluble and non-volatile at
extrusion temperatures and has a solubility parameter
greater than $10(cal/cc)^{\frac{1}{2}}$.

2.    A composition according to claim 1, in which the
plasticizer is an N-substituted fatty acid amide, an
aromatic sulphonamide, an aryl phosphate or phosphite,
a sulphonated alkyl phenol, an N-alkyl pyrrolidine, or
a mixture of two or more thereof.

3.    A composition according to claim 2, in which the
plasticizer is a para-toluene sulphonamide, an ortho- or
para-isomer of N-ethyl toluene sulphonamide, N-cyclohexyl-
pyrrolidone, (isopropyl phenyl) diphenyl phosphate, a
dimethylamide of a vegetable oil fatty acid, a sulphonated
1-5 C alkyl phenol, or a mixture of two or more thereof.

4.    A composition according to any of claims 1 to 3,
in which the amount of plasticizer is 5 to 50 parts by
weight per 100 parts by weight of said vinyl alcohol
polymer.

5.    A composition according to any of claims 1 to 4,
in which the vinyl alcohol polymer is a homopolymer, a
vinyl acetate-vinyl alcohol copolymer containing 85 to
95% vinyl alcohol units, an olefin-vinyl alcohol copolymer containing up to 45%, preferably up to 15%, of
units formed from an olefin having 2 to 4 carbon atoms,
or a mixture of two or more thereof.

6. A composition according to any of claims 1 to 5, in which the vinyl alcohol polymer has a molecular weight in the range 30,000 to 150,000.

7: A composition according to any of claims 1 to 5, in which the vinyl alcohol polymer in a blend of polymer having a molecular weight of 30000 to 40000 and polymer having a molecular weight of 70000 to 140000.

8. A composition according to any of claims 1 to 7, in which the vinyl alcohol polymer is a homopolymer of polyvinyl alcohol content greater than 96%, preferably greater than 98%,and/or a mixture with an olefin-vinyl alcohol copolymer, such as an ethylene-vinyl alcohol copolymer.

9. A multi-layered melt extruded article of manufacture, in which at least one layer comprises a composition according to any of claims 1 to 8.

10. An article according to claim 9, which is in the form of a sheet, or a blow-moulded or injection blow-moulded article.

0095874

# EUROPEAN SEARCH REPORT

European Patent Office

Application number

EP  83 30 2908

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | PATENTS ABSTRACTS OF JAPAN, vol. 1, no. 102, 10th September 1977, page 2347 C 77 & JP - A - 52 65548 (TORAY K.K.) 31-05-1977 * Abstract * | 1-4 | C 08 L  29/04 B 32 B  27/00 |
| X | GB-A-1 051 514  (DENKI KAGAKU KOGYO K.K.) * Claims * | 1,2 | |
| A | US-A-3 287 313  (SABURO IMOTO) * Claims * | 1 | |
| A | FR-A-2 292 007  (DU PONT DE NEMOURS) * Claims * | 1 | |
| A | US-A-3 192 177  (J.G. MARTINS) * Claims * | 1 | TECHNICAL FIELDS SEARCHED (Int. Cl. 3) C 08 L |
| P,X | EP-A-0 063 006  (AMERICAN CAN CY.) * Claims * | 1-4 | |

The present search report has been drawn up for all claims

| Place of search | Date of completion of the search | Examiner |
|---|---|---|
| THE HAGUE | 05-09-1983 | MALHERBE Y.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 92